(19) Europäisches Patentamt

European Patent Office

Office européen des brevets

(11) EP 0 710 529 B1

(12) **EUROPEAN PATENT SPECIFICATION**

(45) Date of publication and mention
of the grant of the patent:
**30.09.1998 Bulletin 1998/40**

(51) Int. Cl.⁶: **B26D 5/00**, B26F 1/38,
G05B 19/4099

(21) Application number: **95117350.9**

(22) Date of filing: **03.11.1995**

(54) **Cutting plotter**

Schneidplotter

Table traçante équipée d'un dispositif de coupe

(84) Designated Contracting States:
**DE FR GB**

(30) Priority: **04.11.1994 JP 271045/94**

(43) Date of publication of application:
**08.05.1996 Bulletin 1996/19**

(73) Proprietor: **MAX CO., LTD.**
**Chuoh-ku Tokyo 103 (JP)**

(72) Inventors:
• **Shimoda, Mitugi,**
**c/o MAX Co., Ltd.**
**Chuo-ku, Tokyo (JP)**
• **Nobe, Nobuyuki,**
**c/o MAX Co., Ltd.**
**Chuo-ku, Tokyo (JP)**
• **Hurukawa, Kouichi,**
**c/o MAX Co., Ltd.**
**Chuo-ku, Tokyo (JP)**
• **Takei, Hideyo,**
**c/o MAX Co., Ltd.**
**Chuo-ku, Tokyo (JP)**
• **Ishii, Syuichi,**
**c/o MAX Co., Ltd.**
**Chuo-ku, Tokyo (JP)**

(74) Representative:
**Turi, Michael, Dipl.-Phys. et al**
**Samson & Partner**
**Widenmayerstrasse 5**
**80538 München (DE)**

(56) References cited:
**EP-A- 0 515 049          FR-A- 2 661 995**

**Description**

BACKGROUND OF THE INVENTION

1. Field of the invention

The present invention relates to a cutting plotter, and more particularly to the control of a rotation angle of the cutting tool of the cutting plotter.

2. Description of the Related Art

In a conventional cutting plotter (see for instance FR-A-2661995), the Bezier curve algorithm is used for processing the curve data. The control unit of the cutting plotter processes the Bezier data, received from a host computer, which contains a start point Po(xo, yo), control points C1 (x1, y1), C2(x2, y2), and an end point Pe (x3, y3) in accordance with division coefficient data $0 < t < 1$, and computes the x-y coordinates of each division points and stores them into a memory.

A three dimensional Bezier curve is given by the following equations.

[Formula 1]

$$\begin{cases} x(t) = x_0(1-t)^3 + x_1 \cdot 3t(1-t)^2 + x_2 \cdot 3t^2(1-t) + x_3t^3 \\ y(t) = y_0(1-t)^3 + y_1 \cdot 3t(1-t)^2 + y_2 \cdot 3t^2(1-t) + y_3t^3 \end{cases}$$

A Bezier curve, as shown in Fig. 5(a), is confined within a convex polygon defined by a start point Po, control points C1 and C2, and an end point Pe, and is expressed as an approximate curve formed by interpolating the respective points Po, P1, ..., Pe on the curve with straight lines between the start point Po and the end point Pe. Therefore, the coordinates of the division points P1, P2, ..., Pe-1 computed using the Bezier curve algorithm will be deviated from an ideal curve IC (indicated by a chain line in Fig. 5(a)) ranging between the start point Po and the end point Pe. If the plotter controls the movement of the blade of the cutting tool for cutting a workpiece at the respective division points on the basis of the rotation angle data that is obtained from the Bezier curve data, the cutting tool takes an irregular motion at those division points. As a result, the contour of the workpiece thus cut is irregular in shape to lose its smoothness at those points, viz., points Po and Pe of the Bezier curve continuous to other segments, as shown in Fig. 5(b).

In the cutting plotter which cuts a workpiece along a curve by moving the blade of its cutting tool therealong under the Bezier curve basis control, the cutting tool sometimes is irregularly moved for plotting at the connection points and their vicinity of the Bezier curve and other segments. As a result, a contour of the worked workpiece loses the smoothness there, whereby the finishing quality of the workpiece is deteriorated.

SUMMARY OF THE INVENTION

Accordingly, an object of the present invention is to provide a cutting plotter which is to improve the finishing quality of a workpiece that is cut, by a cutting plotter, along a curve at the connection points and their vicinity of the Bezier curve to other segments.

To achieve the object, the present invention provides a cutting plotter according to claim 1.

The computing means of the control unit processes the curve data in accordance with a Bezier curve algorithm to generate Bezier curve data.

Further, it differentiates the vectors at a start point and an end point of the Bezier curve data, to thereby obtain the tangential directions, and computes a connection angle between each of the tangential directions and a segment connected to the Bezier curve.

The comparing means compares the connection angle with a reference angle.

When the connection angle is smaller than the reference angle data, the control of the rotation angle of the cutting tool is not carried out at the connection points, and the blade of the cutting tool is moved following the movement of the cutting head. Therefore, the pencil tool never rotates in accordance with the coordinates data of the Bezier curve at the start and the end points of the Bezier curve. The cutting plotter of the present invention is free from the problem of the contour deformation at the connection points.

BRIEF DESCRIPTION OF THE DRAWINGS

Fig. 1 is a block diagram showing a cutting plotter according to an embodiment of the present invention;

Fig. 2 is a graph useful in explaining the connection angles of successive segments of the Bezier curve;

Fig. 3 is a diagram showing a contour of a workpiece after it is cut, by the cutting plotter, along the segments shown in Fig. 2;

Fig. 4 is a diagram showing an acute connection of segments;

Fig. 5(a) is a diagram showing the coordinates of the curve data as the result of a computation that is performed on the basis of the Bezier algorithm; and

Fig. 5(b) is a diagram showing a contour of a workpiece that is cut by a conventional cutting plotter using the curve data shown in Fig. 5(a).

DETAILED DESCRIPTION OF THE PREFERRED EMBODIMENTS

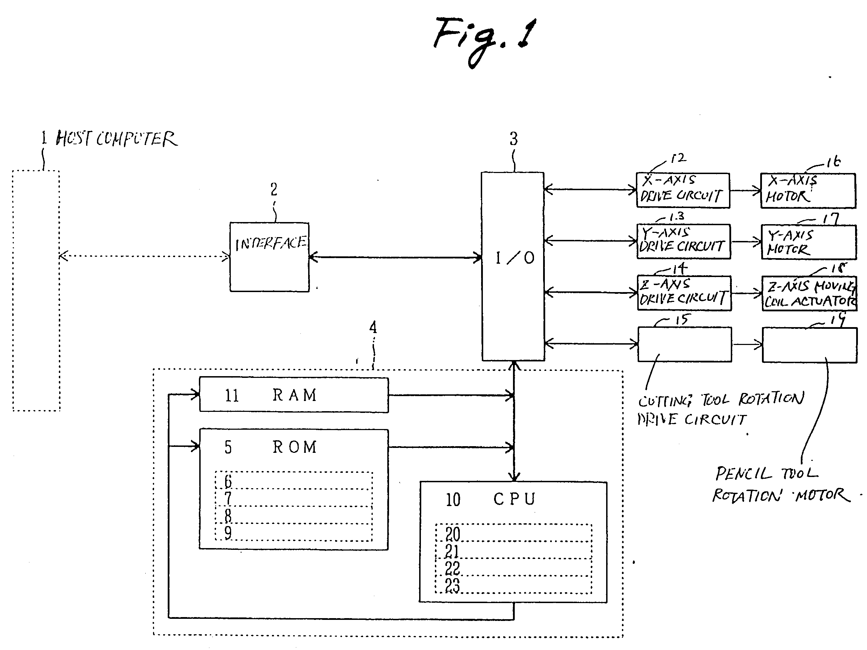

An embodiment of a cutting plotter according to the present invention will be described with reference to Figs. 1 to 4. Fig. 1 is a block diagram showing the cutting plotter of the present invention. Graphic data coming from a host computer 1 is transmitted to a cutting control unit 4, through an interface 2 and an input/output control unit 3. A ROM 5 contained in the cutting control unit 4 stores a Bezier curve processing program 6, a line processing program 7, a cutting tool rotation-control program 8, a cutting execution program 9, and the like. A CPU 10 processes input data under control of the related program of the ROM 5 to generate cutting data and to store it into a RAM 11.

The input/output control unit 3 is connected to the X-, Y-, and Z-axis drive circuits 12, 13 and 14, and a cutting tool rotation drive circuit 15. The drive circuits 12, 13, 14 and 15 drive respectively X- and Y-axis motors 16 and 17, a Z-axis moving coil actuator 18, and a pencil tool rotation motor 19.

The CPU 10 contains a line data computing function 20, a Bezier curve data computing function 21, a tangential direction computing function 22, a connection angle comparing function 23, and the like. The CPU 10 computes the coordinates of lines and curves based on input data. The curve data containing a start point, two control points, and an end point is divided into segments by a division coefficient f ($0 < t < 1$) of the coefficient data of a Bezier curve processing program 6 that is stored in the ROM 5, and computes the X-Y coordinates of a start point, an end point, and division points in accordance with a Bezier curve algorithm, and stores the result of the computation into the RAM 11.

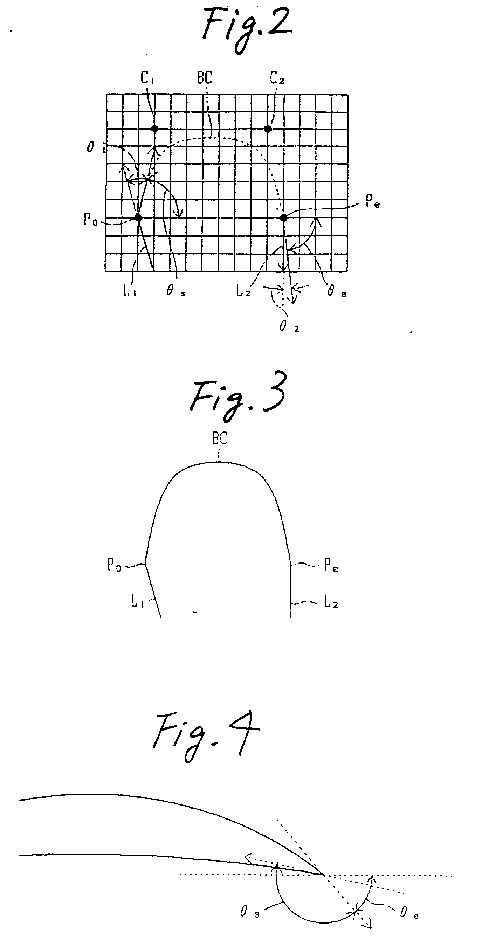

Using the tangential direction computing function 22, the CPU differentiates the tangential directions $\theta s$ and $\theta e$ of a curve at a start point $Po$ ($x_o$, $y_o$) and an end point $Pe(x_3, y_3)$ as shown in Fig. 2. The following expressions are used for computing the tangential directions $\theta s$ and $\theta e$.

$$\text{Start point}: \frac{dx(0)}{dt} = x_1 - x_o, \ \frac{dy(0)}{dt} = y_1 - y_o, \ \theta s = \tan^{-1}\left(\frac{y_1 - y_o}{x_1 - x_o}\right) \qquad \text{[Formula 2]}$$

$$\text{End point}: \frac{dx(1)}{dt} = x_3 - x_2, \ \frac{dy(1)}{dt} = y_3 - y_2, \ \theta e = \tan^{-1}\left(\frac{y_3 - y_2}{x_3 - x_2}\right)$$

In a case where a curve BC is continuous to other segments L1 and L2 as shown in Fig. 2, the CPU computes the connection angles $\theta 1$ and $\theta 2$ of the segments L1 and L2 defined with respect to known directions in the X-Y coordinate system, and compares them with the reference angle data (e.g., 90°) by using the connection angle comparing function 23. In this embodiment, the tangential vector at the connection points of the curve BC serves as this known direction. If the connection angle is smaller than a reference angle (the obtuse angle connection, when applicable), the CPU sets to zero the control quantities of rotation angles of the cutting tool at the connection points in the generated cutting data, and stores the result into the RAM 11.

Accordingly, in a case where the connection angles are smaller than the reference angle (that is the obtuse angle connections) as shown in Fig. 2, the rotation angles of the cutting tool are not controlled in the vicinity of the connection point, the blade of the cutting tool takes a caster motion following the movement of the cutting head. Therefore, there never occurs an irregular plotting of the segment by the cutting tool at a point near to the connection point Po or Pe, which is caused owing to the characteristic of the Bezier curve.

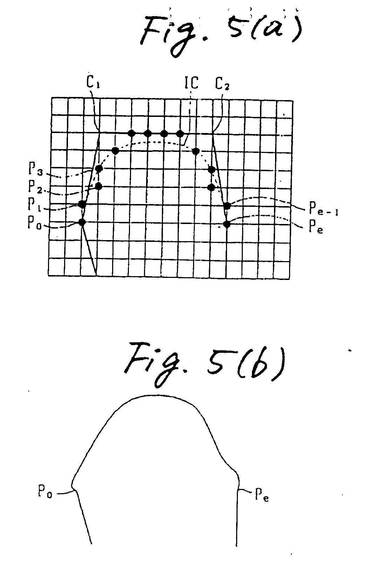

In a case where the curves are connected by the acute angle (the acute angle connection, when applicable), the control of the control angle of the cutting tool is removed, and the edge of the blade takes a caster motion and the moving blade edge forms a locus shaped in a zig-zag fashion. When the connection angle $\theta 3$ exceeds the reference angle data as shown in Fig. 4, the rotation angle of the cutting tool is sequentially controlled so that the tool is turned in the tangential direction of the curve and the direction of the next segment. Accordingly, a good finishing quality of the worked workpiece at the acute angled connection point and its vicinity of the contour of the worked workpiece is ensured irrespective of the characteristic of the Bezier curve.

As described above, in the present invention, the rotation angle of the cutting tool is interruptively controlled in accordance with the connection angle between a curve and another curve and between a curve and a straight line. Where the connection angle is smaller than the reference angle (that is, the obtuse connection), no rotation angle control is performed. Accordingly, there never occurs an irregular plotting of the segments by the cutting tool at points near to the connection points of the Bezier curve. The resultant contour of the workpiece after worked by the cutting tool is smooth at the connection point and its vicinity of the Bezier curve and the segment, thereby providing a quality finishing of the workpiece.

## Claims

1. A cutting plotter having a cutting head with a rotatable cutting tool, means for two-dimensionally positioning the cutting head, means for adjusting the rotational position of the cutting tool, and computing means for processing input curve data by a Bezier curve algorithm to develop it into coordinates data, the cutting plotter further comprising a control unit for controlling the position of the cutter head and the angular position of the cutting tool under three-dimensional Bezier curve basis control,

   CHARACTERIZED IN THAT said cutting plotter comprises:

   means for differentiating the vectors at a start point and an end point on a Bezier curve, to thereby obtain tangential directions, and computing a connection angle between each of the tangential directions and segments connected to the Bezier curve at its respective end points;

   comparing means for comparing each of said connection angles with a reference angle; and

   control means for selectively interrupting the control of the rotation angle of the cutting tool at the connection points in accordance with the result of said comparing means.

2. A cutting plotter according to claim 1, wherein said control means interrupts control of the rotation angle of the cutting tool when said comparing means detects that said connection angle obtained by said computing means is smaller than said reference angle.

3. A cutting plotter according to claim 2, wherein said reference angle is a right angle.

## Patentansprüche

1. Ein Schneidplotter mit einem Schneidkopf mit einem rotierbaren Schneidwerkzeug, Einrichtungen zum zweidimensionalen Positionieren des Schneidkopfes, Einrichtungen zur Einstellung der rotationsmäßigen Position des Schneidwerkzeugs und Recheneinrichtungen zur Verarbeitung eingegebener Kurvendaten mittels eines Bezier-Kurvenalgorithmuses, um diese zu Koordinatendaten zu entwickeln, wobei der Schneidplotter desweiteren eine Steuereinheit aufweist zur Steuerung der Position des Schneidkopfes und der Winkelstellung des Schneidwerkzeugs unter einer drei-dimensionalen Bezier-Kurvenbasissteuerung,

   dadurch gekennzeichnet, daß der Schneidplotter aufweist:

   Einrichtungen zum Differenzieren der Vektoren an einem Startpunkt und an einem Endpunkt auf einer Bezier-Kurve, um dabei tangentiale Richtungen zu erhalten und zum Berechnen eines Verbindungswinkels zwischen jeder der Tangentialrichtungen und Segmenten, die mit der Bezier-Kurve an deren entsprechenden Endpunkten verbunden sind;

   Vergleichseinrichtungen zum Vergleichen jedes Verbindungswinkels mit einem Referenzwinkel; und

   Steuermittel zum wahlweisen Unterbrechen der Steuerung des Rotationswinkels des Schneidwerkzeugs an den Verbindungspunkten in Übereinstimmung mit dem Resultat von den Vergleichseinrichtungen.

2. Schneidplotter nach Anspruch 1, wobei das Steuermittel die Steuerung des Rotationswinkels des Schneidwerkzeugs unterbricht, wenn die Vergleichseinrichtung erfaßt, daß der durch die Recheneinrichtung erhaltene Verbindungswinkel kleiner als der Referenzwinkel ist.

3. Schneidplotter nach Anspruch 2, wobei der Referenzwinkel ein rechter Winkel ist.

**Revendications**

1. Table traçante équipée d'un dispositif de coupe ayant une tête de coupe munie d'un outil de coupe rotatif, des moyens pour positionner la tête de coupe dans deux dimensions, des moyens pour régler la position en rotation de l'outil de coupe, et des moyens de calcul pour traiter les données de courbe d'entrée par un algorithme de courbe de Bézier pour les développer en données de coordonnées, la table traçante équipée d'un dispositif de coupe comprenant, de plus, une unité de commande pour commander la position de la tête de coupe et la position angulaire de l'outil de coupe selon une commande à base de courbe de Bézier à trois dimensions,
   CARACTERISEE EN CE QUE ladite table traçante équipée d'un dispositif de coupe comprend :

   des moyens pour différentier les vecteurs au niveau d'un point de départ et d'un point de fin sur une courbe de Bézier, pour obtenir de ce fait des directions tangentielles, et pour calculer un angle de connexion entre chacune des directions tangentielles et des segments reliés à la courbe de Bézier au niveau de ses points de fin respectifs ;
   des moyens de comparaison pour comparer chacun desdits angles de connexion à un angle de référence ; et
   des moyens de commande pour interrompre de manière sélective la commande de l'angle de rotation de l'outil de coupe au niveau des points de connexion selon le résultat desdits moyens de comparaison.

2. Table traçante équipée d'un dispositif de coupe selon la revendication 1, dans laquelle lesdits moyens de commande interrompent la commande de l'angle de rotation de l'outil de coupe lorsque lesdits moyens de comparaison détectent que ledit angle de connexion obtenu par lesdits moyens de calcul est plus petit que ledit angle de référence.

3. Table traçante équipée d'un dispositif de coupe selon la revendication 2, dans laquelle ledit angle de référence est un angle droit.

Fig.1

Fig.2

Fig.3

Fig.4

7

Fig. 5(a)

Fig. 5(b)